# FASCICULE DE BREVET EUROPEEN

(11) **EP 1 063 185 B1**
(45) Date de publication et mention de la délivrance du brevet: **03.03.2004**
(21) Numéro de dépôt: 00401807.3
(22) Date de dépôt: 23.06.2000
(51) Int. Cl.: B65G 47/90, B65G 47/91

(54) **Dispositif de transfert mécanique à prise-pose**
Mechanische Aufnahme und Absetz Fördervorrichtung
Mechanical pick and place transfert device

(30) Priorité: 25.06.1999 FR 9908158
(43) Date de publication de la demande: 27.12.2000
(73) Titulaire: Neyret, Guy, F-69340 Francheville (FR)
(72) Inventeur: Neyret, Guy, F-69340 Francheville (FR)
(74) Mandataire: Fosse, Danièle

(56) Documents cités:
- EP-A- 0 038 262
- DE-A- 4 234 837
- GB-A- 1 281 988

## Description

La présente invention concerne un dispositif de transfert mécanique à prise-pose destiné à saisir une pièce et à la déplacer pour la poser sur ou dans un ensemble en cours d'assemblage, cette opération étant effectuée de manière répétée à une cadence élevée.

De tels dispositifs sont par exemple intégrés dans des machines d'assemblage automatiques ou des machines d'usinage ou encore des dispositifs de pose d'étiquettes.

De manière traditionnelle, pour les dispositifs de ce type à commande mécanique, l'outil preneur-poseur tel qu'une pince, un suceur, etc., est porté par un support coulissant parallèlement à son axe pour saisir puis dégager la pièce (ou amener et poser la pièce), ce support étant susceptible d'un mouvement de translation longitudinal pour passer de l'emplacement de prise à l'emplacement de pose. On crée ainsi pour l'organe de préhension un déplacement cyclique en U permettant d'effectuer le transfert voulu.

Un tel dispositif de prise-pose est largement utilisé dans un dispositif pour la pose de pièces telles que des étiquettes amenées adhérant sur une bande sans fin, le dispositif faisant défiler la bande avec une inversion de direction sur l'arête d'une plaque appelée "sabre" afin que les étiquettes se décollent de la bande et soient amenées en regard de la surface d'un objet sur lequel elles doivent être collées, par exemple en tant qu'adhésif double-face pour coller cet objet sur un autre.

Ainsi, on connaît par EP-A-0 038 262, un dispositif pour apposer sur des objets des étiquettes adhésives provisoirement fixées sur une bande de support muni d'un revêtement anti-adhésif qui comprend des moyens pour séparer les étiquettes de la bande adhésive. Ce dispositif comprend un élément de pressage présentant des canaux reliés à une source de dépression débouchant dans une face de travail ainsi que des moyens de déplacement de cet élément d'une première position dans laquelle sa face de travail se trouve en contact avec l'étiquette venant d'être séparée de la bande à une seconde position dans laquelle cette face de travail presse l'étiquette sur un objet à étiqueter. Cet élément de pressage est monté dans un support qui est solidaire du cylindre du vérin, en pouvant coulisser dans l'axe du piston du vérin, le cylindre dudit vérin étant monté pivotant autour d'un axe fixe et la tige du vérin étant propre à entraîner l'élément de pressage et portant en outre un galet au contact d'une rampe fixe inclinée. Lors de l'abaissement de la tige du vérin, le galet entraîne en pivotement le support ce qui permet de déplacer également l'élément de pressage monté dans le support vers la position où une étiquette qu'il a prise doit être déposée. Ainsi, le déplacement de l'élément de pressage s'effectue dans la direction d'avancée de la bande portant l'étiquette, de la position de prise de l'étiquette à la position de dépose de l'étiquette et est assuré par le pivotement du support du fait du déplacement du galet sur une rampe inclinée lors de la descente de la tige du vérin.

Cependant, au cours de l'amenée des pièces telles que des étiquettes pour leur saisie et leur pose, la position de ces pièces peut varier sur leur support et engendrer une mauvaise saisie de la pièce et, par conséquent, une mauvaise pose de la pièce.

Ceci est particulièrement gênant dans le cas de pièces adhésives de faibles dimensions qui doivent ensuite être posées sur une pièce de manière très précise.

Ainsi, dans le cas des étiquettes sur bande sans fin, on règle la position de l'outil de saisie et de pose par rapport à la largeur existant entre le bord de la bande et le bord de l'étiquette reposant dessus.

Cependant, d'une production à une autre, cette dimension peut changer et, en outre, elle peut varier au sein d'une même production, la dimension entre le bord de la bande et le bord de l'étiquette pouvant varier.

Afin de pallier cet inconvénient, la présente invention a pour but de proposer un dispositif de transfert mécanique à prise-pose de pièces pourvu d'un outil preneur-poseur dont la position est réglable transversalement dans le chemin d'amenée des pièces.

A cet effet, la présente invention a pour objet un dispositif de transfert mécanique à prise-pose destiné à saisir une pièce et à la déplacer pour la poser sur ou dans un ensemble en cours d'assemblage du type comprenant un outil preneur-poseur tel qu'une pince, un suceur, porté à l'extrémité d'un support coulissant **de manière à définir un chemin de montée et descente dudit outil preneur-poseur** pour saisir puis dégager la pièce arrivant sur un chemin d'amenée **ainsi**que pour amener et poser la pièce, et **ledit support étant lui-même** susceptible d'un mouvement de translation longitudinal selon une direction parallèle à l'axe d'avancée des pièces pour passer de l'emplacement de prise à l'emplacement de pose, ledit outil preneur-poseur étant porté par le support entraînable en translation transversale selon une direction perpendiculaire à l'axe d'avancée des pièces, **caractérisé en ce qu'il comporte en outre une première butée ménagée en saillie dans le chemin de montée et de descente de l'outil preneur-poseur à l'emplacement de prise et/ou une seconde butée ménagée en saillie dans le chemin de montée et de descente de l'outil preneur-poseur à l'emplacement de pose, la position en saillie desdites butées étant réglable et l'entraînement en translation transversale dudit outil preneur-poseur sous l'effet des butées selon une direction** perpendiculaire à l'axe d'avancée des pièces intervenant lors de la montée ou descente dudit outil.

Ainsi, quand on abaisse l'outil preneur-poseur, soit à l'emplacement de prise soit à l'emplacement de pose, celui-ci vient buter contre une butée interposée dans le chemin de descente ce qui provoque l'entraînement en translation transversale de l'outil preneur-poseur qui poursuit sa course de descente pour venir saisir ou poser une pièce à un emplacement parfaitement déterminé sur le chemin d'amenée.

De manière avantageuse, le dispositif de transfert mécanique selon l'invention permet d'avoir une position précise de l'outil preneur-poseur par rapport à la pièce à saisir ou par rapport à l'emplacement de pose, grâce au fait que ledit outil preneur-poseur est entraînable entre une position initiale où il est maintenu par un moyen de rappel élastique et une position de prise ou de pose où il est amené par l'une des butées contre l'effet du moyen de rappel élastique et au fait que les butées sont réglables pour pouvoir changer la position de l'outil preneur-poseur.

En conséquence, une butée est mise en place aussi bien au niveau du poste de saisie d'une pièce qu'au niveau du poste de pose de la pièce ce qui permet de régler de manière complètement indépendante la position transversale de l'outil preneur-poseur au niveau du poste de saisie et au niveau du poste de pose.

De préférence, l'outil preneur-poseur est monté sur un chariot guidé en translation à l'extrémité du support et pourvu d'un moyen de glissement pour coopérer, lors de la descente de l'outil, avec un chanfrein ménagé sur la butée.

Un tel dispositif de transfert mécanique à prise-pose est très avantageux dans le cas du transfert d'étiquettes arrivant sur une bande sans fin tel que mentionné précédemment, où la saillie de la butée permet de régler parfaitement l'outil preneur-poseur par rapport à l'étiquette et non plus par rapport au bord de la bande sur laquelle repose l'étiquette. Il est donc possible de régler de manière relativement simple, l'outil preneur-poseur pour l'adapter aux variations pouvant intervenir au sein d'une même production.

Selon une première forme de réalisation, la butée est entraînable en translation par des moyens mécaniques actionnables mécaniquement par un opérateur.

Selon une seconde forme de réalisation de l'invention, le dispositif comporte des moyens de détection de position de la pièce à saisir mis en place en amont de l'emplacement de prise et qui coopèrent avec des moyens de commande électrique des moyens mécaniques d'entraînement en translation de la butée.

On décrira maintenant l'invention plus en détail en référence au dessin dans lequel :
la figure 1 représente une vue en coupe d'un dispositif selon l'invention ;
la figure 2 représente une vue en coupe d'un dispositif selon une variante de réalisation.

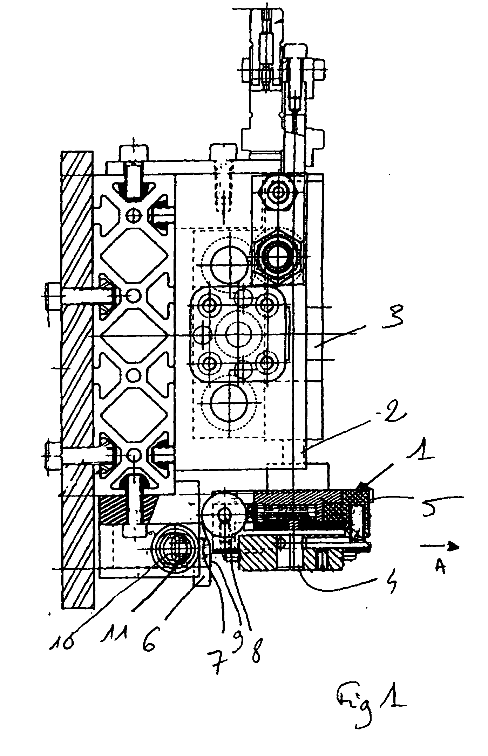

Comme on le voit à la figure 1, l'outil preneur-poseur 1 est monté à l'extrémité d'un support 2 coulissant parallèlement à son axe. Ce support 2 est constitué par la tige d'un vérin 3.

L'outil preneur-poseur constitué ici d'un suceur 4 est porté par un chariot 5 monté guidé en translation à l'extrémité du support 2 entre une position initiale où il est maintenu par un moyen de rappel élastique et une position de prise ou de pose de la pièce où ledit chariot 5 est entraîné en translation transversale, perpendiculairement au chemin d'avancée 13 des pièces, sous l'effet de butées 6 interposées dans le chemin de descente dudit outil 1 pour l'une à l'emplacement de pose et pour l'autre à l'emplacement de prise.

Le chariot 5 est de préférence monté à l'extrémité du support 2 à compliance rotulable de telle sorte qu'on assure une bonne pose ou prise même si la pièce de réception ou l'ensemble recevant la pièce saisie n'est pas plan.

Chaque butée 6 est entraînable en translation en saillie dans le chemin de montée ou de descente de l'outil 1 entraîné par le vérin 3. Chaque butée 6 présente un chanfrein 7 contre lequel vient en contact un moyen de glissement ménagé sur le chariot 5. Ce moyen de glissement est ici constitué d'un galet rotatif 8 qui favorise le glissement du chariot 5 contre le chanfrein 7 qui repousse ledit chariot 5 guidé en translation selon le sens de la flèche A dont la direction est perpendiculaire à l'axe d'avancée des pièces à saisir.

Chaque butée 6 présente à la suite du chanfrein 7 une partie plane verticale 9 contre laquelle est en butée le chariot 5 lorsqu'il est complètement descendu.

Chaque butée 6 est entraînable en translation par des moyens mécaniques actionnables mécaniquement par un opérateur. Ces moyens mécaniques sont constitués par un excentrique 10 logé dans un alésage transversal 11 de chaque butée 6 et blocable à son extrémité par un écrou. L'entraînement en rotation de l'excentrique 10 permet d'entraîner plus ou moins en saillie la butée 6 à laquelle il est adjoint.

Il est ainsi possible de régler la position de chaque butée 6 par rapport au chemin de descente et de montée de l'outil preneur poseur 1.

On peut prévoir également que l'une et/ou l'autre des butées 6 sont entraînables en translation sous l'effet d'un excentrique entraîné en rotation par un moteur commandé par des moyens de détection de position de la pièce à saisir tels que, par exemple, une cellule photoélectrique détectant le bord d'une étiquette.

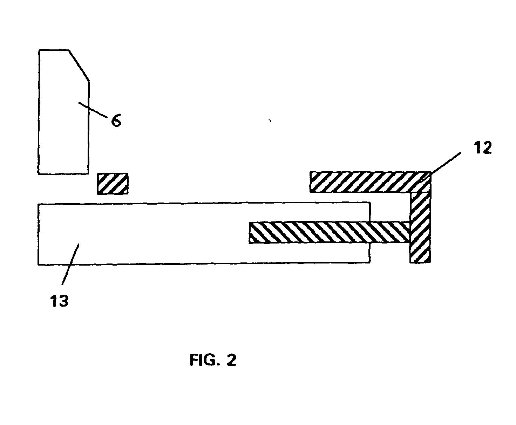

Dans le cas de pièces adhésives à double face, le dispositif comporte un gabarit 12. Comme on peut le voir à la figure 2, la butée 6 s'étend au-dessus du chemin d'avancée 13 des pièces à saisir en saillie dans le chemin de descente et de montée de l'outil preneur-poseur 1 tandis que le gabarit 12 repose au-dessus dudit chemin 13, sa position étant réglable.

Ladite butée 6 est entraînable en translation à l'aide de moyens mécaniques tels qu'un excentrique entraîné en rotation par des moyens électriques tels qu'un servomoteur commandé par des moyens de détection de position des pièces à saisir positionné en amont de la station de prise le long du chemin d'avancée 13.

Lorsque la position d'une pièce a varié dans le chemin d'avancée 13, la nouvelle position est détectée et cette information traitée et analysée commande en conséquence le moteur pour amener la butée 6 à une position en saillie en correspondance. Le gabarit 12, associé à la butée 6, est alors lui aussi entraîné simultanément en correspondance au-dessus du chemin d'avancée 13 pour se positionner correctement par rapport à la nouvelle position de la pièce.

## Revendications

1. Dispositif de transfert mécanique à prise-pose destiné à saisir une pièce et à la déplacer pour la poser sur ou dans un ensemble en cours d'assemblage du type comprenant un outil preneur-poseur (1) tel qu'une pince, un suceur, porté à l'extrémité d'un support (2) coulissant **de manière à définir un chemin de montée et descente dudit outil preneur-poseur (1)** pour saisir puis dégager la pièce arrivant sur un chemin d'amenée (12) **ainsi que pour** amener et poser la pièce, et **ledit support (2) étant lui-même** susceptible d'un mouvement de translation longitudinal **selon une direction parallèle à l'axe d'avancée des pièces** pour passer de l'emplacement de prise à l'emplacement de pose, ledit outil preneur-poseur (1) étant porté par le support (2) entraînable en translation transversale selon une direction perpendiculaire à l'axe d'avancée des pièces, **caractérisé en ce qu'il comporte en outre une première butée (6) ménagée en saillie dans le chemin de montée et de descente de l'outil preneur-poseur (1) à l'emplacement de prise et/ou une seconde butée (6) ménagée en saillie dans le chemin de montée et de descente de l'outil preneur-poseur (1) à l'emplacement de pose, la position en saillie desdites butées (6) étant réglable et l'entraînement en translation transversale dudit outil preneur-poseur (1) sous l'effet des butées (6) selon une direction perpendiculaire à l'axe d'avancée des pièces intervenant lors de la montée ou descente dudit outil (1).**

2. Dispositif selon la revendication 1,
**caractérisé en ce que** l'outil preneur-poseur (1) est entraînable entre une position initiale où il est maintenu par un moyen de rappel élastique et une position de prise ou de pose où il est amené par l'une des butées (6) contre l'effet du moyen de rappel élastique.

3. Dispositif selon l'une des revendications 1 et 2, **caracterisé en ce que** l'outil preneur-poseur (1) est monté sur un chariot (5) guidé en translation à l'extrémité du support (2) et pourvu d'un moyen de glissement pour coopérer, lors de la descente dudit outil preneur-poseur (1), avec un chanfrein (7) ménagé sur la butée (6).

4. Dispositif selon la revendication 3,
**caractérisé en ce que** le moyen de glissement est un galet rotatif (8).

5. Dispositif selon la revendication 3,
**caractérisé en ce que** le moyen de glissement est un chanfrein complémentaire de celui (7) de la butée (6).

6. Dispositif selon l'une des revendications 3 à 5,
**caractérisé en ce que** le chariot (5) est monté à l'extrémité du support (2) à compliance rotulable.

7. Dispositif selon l'une des revendications 1 à 6,
**caractérisé en ce que des moyens mécaniques actionnables mécaniquement par un opérateur sont agencés pour entraîner chaque butée (6) en translation en saillie dans le chemin de monté descente de l'outil preneur-poseur (1).**

8. Dispositif selon la revendication 7,
**caractérisé en ce que** les moyens mécaniques d'entraînement en translation des butées (6) sont constitués par un excentrique (10) logé dans un alésage transversal (11) de chaque butée (6) et blocable à son extrémité par un écrou, l'entraînement en rotation de l'excentrique (10) provoquant l'entraînement en translation de la butée (6) **en saillie dans le chemin de monté descente de l'outil preneur-poseur (1)**.

9. Dispositif selon l'une des revendications 1 à 6,
**caractérisé en ce qu'**il comporte des moyens de détection de position de la pièce à saisir mis en place en amont de l'emplacement de prise et qui coopèrent avec des moyens de commande électrique tels qu'un moteur, un servomoteur, de moyens mécaniques d'entraînement en translation **en saillie** **dans le chemin de monté descente de l'outil preneur-poseur** (1) de chaque butée (6) tels qu'un excentrique.

10. Dispositif selon la revendication 9,
**caractérisé en ce que** la butée (6) à l'emplacement de pose est associée à un gabarit (12), celui-ci étant entraîné en translation simultanément avec la butée (6).

## Claims

1. Mechanical pick and place transfer device intended to grasp a part and to move it in order to place it on or in an assembly during assembly, of the type comprising a pick and place tool (1) , such as pincers, a sucker, carried at the end of a sliding support (2) so as to define an ascending and descending path of the said pick and place tool (1), in order to grasp and then release the part arriving on a feed path (12) and also in order to feed and place the part, and the said support (2) being itself capable of a longitudinal translational movement in a direction parallel to the axis of advance of the parts in order to move from the pick location to the place location, the said pick and place tool (1) being carried by the support (2) that can be driven in transverse translational movement in a direction perpendicular to the axis of advance of the parts, **characterised in that** it also comprises a first stop (6) provided projecting into the ascending and descending path of the pick and place tool (1) at the pick location and/or a second stop (6) provided projecting into the ascending and descending path of the pick and place tool (1) at the place location, the projecting position of the said stops (6) being adjustable and the drive of the said pick and place tool (1) in transverse translational movement under the effect of the stops (6) in a direction perpendicular to the axis of advance of the parts occurring during the ascent or descent of the said tool (1).

2. Device according to Claim 1,
**characterised in that** the pick and place tool (1) can be driven between an initial position where it is held by elastic return means and a pick or place position where it is brought by one of the stops (6) against the effect of the elastic return means.

3. Device according to one of Claims 1 and 2,
**characterised in that** the pick and place tool (1) is mounted on a carriage (5) guided in translational movement at the end of the support (2) and provided with sliding means to interact, during the descent of the said pick and place tool (1), with a chamfer (7) provided on the stop (6).

4. Device according to Claim 3,
**characterised in that** the sliding means are a rotatable roller (8).

5. Device according to Claim 3,
**characterised in that** the sliding means are a chamfer complementary to that (7) of the stop (6).

6. Device according to one of Claims 3 to 5,
**characterised in that** the carriage (5) is mounted at the end of the support (2) with swivellable compliance.

7. Device according to one of Claims 1 to 6,
**characterised in that** mechanical means that can be mechanically actuated by an operator are provided to drive each stop (6) in translational movement projecting into the ascending descending (sic) path of the pick and place tool (1).

8. Device according to Claim 7,
**characterised in that** the mechanical means for driving the stops (6) in translational movement consist of an eccentric (10) accommodated in a transverse bore (11) of each stop (6) and can be locked at the end thereof by a nut, rotational driving of the eccentric (10) giving rise to translational driving of the stop (6) projecting into the ascending descending (sic) path of the pick and place tool (1).

9. Device according to one of Claims 1 to 6,
**characterised in that** it comprises means for detecting the position of the part to be grasped installed upstream of the pick location and which interact with electrical control means, such as a motor, a servomotor, mechanical means, such as an eccentric, for driving each stop (6) in translational movement projecting into the ascending descending (sic) path of the pick and place tool (1).

10. Device according to Claim 9,
**characterised in that** the stop (6) at the place location is associated with a template (12), the latter being driven in translational movement simultaneously with the stop (6).

## Patentansprüche

1. Mechanische Verlagerungsvorrichtung zum Greifen und/oder Platzieren, die dazu bestimmt ist, ein Teil zu greifen und fortzubewegen, um es bei der Montage an oder in einer Baugruppe anzubringen, wobei die Vorrichtung ein Greif-Lege-Werkzeug (1), beispielsweise eine Zange, und einen Sauger umfasst, der an einem Ende eines Halters (2) montiert ist, der so verschiebbar ist, dass dadurch ein Hub- und Senkweg des genannten Greif-Lege-Werkzeugs (1) definiert ist, um das auf einem Zuführungsweg (12) eintreffende Teil zu greifen und wieder loszulassen und um das Teil mitzuführen und zu platzieren, wobei der genannte Halter (2) selbst zu einer Längstranslationsbewegung parallel zu der Vorschubachse der Teile in der Lage ist, um von der Greifstelle zu der Legestelle zu gelangen, wobei das genannte Greif-Legewerkzeug (1) von dem Halter (2) getragen wird, welcher im rechten Winkel zu der Vorschubachse der Teile in Quertranslation betätigt werden kann, **dadurch gekennzeichnet, dass** sie ferner einen ersten Anschlag (6), welcher vorspringend in dem Hubund Senkweg des Greif-Legewerkzeugs (1) an der Greifstelle angeordnet ist, und/oder einen zweiten Anschlag (6) umfasst, welcher vorspringend in dem Hub- und Senkweg des Greif-Legewerkzeugs (1) an der Legestelle angeordnet ist, wobei die vorspringende Position der genannten Anschläge (6) verstellbar ist, und die Betätigung der Quertranslation des genannten Greif-Legewerkzeugs (1) unter der Wirkung der Anschläge (6) im rechten Winkel zu der Vorschubachse der Teile in dem Hub- oder Senkweg des genannten Werkzeugs (1) erfolgt.

2. Vorrichtung nach Anspruch 1,
**dadurch gekennzeichnet, dass** das Greif-Legewerkzeug (1) aus einer Ausgangsposition, in welcher es durch eine elastische Rückzugvorrichtung gehalten wird, durch einen der Anschläge(6) gegen die Kraft der elastischen Rückzugvorrichtung in eine Greif- oder Legeposition gebracht werden kann.

3. Vorrichtung nach einem der Ansprüche 1 und 2,
**dadurch gekennzeichnet, dass** das Greif-Legewerkzeug (1) auf einem Schlitten (5) montiert ist, der an dem Ende des Halters (2) translatorisch geführt ist und mit einem Gleitführungsmittel versehen ist, so dass es beim Senken des genannten Greif-Legewerkzeugs (1) mit einer an dem Anschlag angeordneten Fase (7) zusammenwirken kann.

4. Vorrichtung nach Anspruch 3,
**dadurch gekennzeichnet, dass** das Gleitführungsmittel eine Gleitrolle (8) ist.

5. Vorrichtung nach Anspruch 3,
**dadurch gekennzeichnet, dass** das Gleitführungssmittel eine Fase ist, die zu derjenigen (7) des Anschlags (6) zuätzlich vorgesehen ist.

6. Vorrichtung nach einem der Ansprüche 3 bis 5,
**dadurch gekennzeichnet, dass** der Schlitten (5) an dem Endabschnitt des Halters (2) mit einer Kippzapfenfederung montiert ist.

7. Vorrichtung nach einem der Ansprüche 1 bis 6,
**dadurch gekennzeichnet, dass** die mechanischen Mittel, die durch einen Benutzer mechanisch betätigt werden können, darauf eingerichtet sind, die Betätigung jedes Anschlags (6) durch vorspringende Translation in den Hub- und Senkweg des Greifund Legewerkzeugs (1) zu ermöglichen.

8. Vorrichtung nach Anspruch 7,
**dadurch gekennzeichnet, dass** die mechanischen Mittel zur Betätigung der Translation der Anschläge (6) durch einen Exzenter (10) gebildet werden, welcher sich in einer Querbohrung (11) jedes Anschlags (6) befindet und mittels einer Schraubenmutter an seinem Endabschnitt verriegelbar ist, wobei der Drehantrieb des Exzenters (10) den Translationsantrieb des vorspringenden Anschlags (6) in den Hub- und Senkweg des Greif-Legewerkzeugs (1) bewirkt.

9. Vorrichtung nach einem der Ansprüche 1 bis 6,
**dadurch gekennzeichnet, dass** sie Mittel zur Detektion der Position des zu greifenden Teils, welches oberhalb der Greifstelle bereit liegt, die mit Mitteln zur elektrischen Steuerung, beispielsweise einem Motor, einem Servomotor, zusammenwirken, und mechanische Mittel zur Betätigung der vorspringenden Translation jedes Anschlags (6),in den Hubund Senkweg des Greif-Legewerkzeugs (1), beispielsweise einen Exzenter, umfasst.

10. Vorrichtung nach Anspruch 9,
**dadurch gekennzeichnet, dass** der Anschlag (6) an der Legestelle mit einer Schablone (12) verbunden ist, welche gleichzeitig mit dem Anschlag (6) durch Translation betätigt wird.
